# EUROPEAN PATENT SPECIFICATION

(11) **EP 0 741 204 B1**
(45) Date of publication and mention of the grant of the patent: **31.10.2001**
(21) Application number: 96106974.7
(22) Date of filing: 03.05.1996
(51) Int. Cl.: D21F 1/00, D21F 7/08

(54) **Papermakers' press fabric**
Presstuch für die Papierherstellung
Toile de presse pour papeterie

(30) Priority: 04.05.1995 US 433676
(43) Date of publication of application: 06.11.1996
(73) Proprietor: HUYCK LICENSCO, INC., Wilmington, Delaware 19891 (US)
(72) Inventor: Gstrein, Hippolit, 2640 Gloggnitz (AT)
(74) Representative: Goddard, David John

(56) References cited:
- EP-A- 0 070 708
- EP-A- 0 133 836
- EP-A- 0 500 480
- GB-A- 2 235 705
- US-A- 4 439 481
- PATENT ABSTRACTS OF JAPAN vol. 016, no. 257 (C-0949), 11 June 1992 & JP 04 057987 A (ICHIKAWA WOOLEN TEXTILE CO LTD), 25 February 1992,
- PATENT ABSTRACTS OF JAPAN vol. 015, no. 293 (C-0853), 25 July 1991 & JP 03 104995 A (DAIWABO CO LTD), 1 May 1991,

## Description

This invention relates to papermakers' fabrics and especially to papermaking fabrics for the press section of a papermaking machine such as disclosed in WO-A-95/28519.

In the conventional fourdrinier papermaking process, a water slurry or suspension of cellulose fibres, known as the paper "stock", is fed onto the top of the upper run of a travelling endless forming belt. The forming belt provides a papermaking surface and operates as a filter to separate the cellulosic fibres from the aqueous medium by providing for the drainage of the aqueous medium through its mesh openings, also known as drainage holes, promoted by vacuum means or the like located on the drainage side of the fabric.

After leaving the forming medium, the somewhat self-supporting paper web is transferred to the press section of the machine and onto a press fabric, also known as press felt, where still more of its water content is removed by passing it through a series of pressure nips formed by cooperating press rolls, these press rolls serving to compact the web as well.

Subsequently, the paper web is transferred to a dryer section where it is passed about and held in heat transfer relation with a series of heated, generally cylindrical rolls to remove still further amounts of water therefrom.

In general, the press fabrics in the press section are used in papermaking machinery to support the moist, freshly formed paper web as it encounters a variety of rolls to extract water from the moist paper web. In addition to serving as a support for the moist paper web, the press fabric serves as a receptacle for the water removed from the paper sheet. Preferably, the press fabric incorporates at least one base fabric woven so as to have relatively large open areas or voids which will enhance its water-conveying capabilities until the water is removed from the fabric upon passage over a suction box or other drainage device. To the base fabric usually is added one or more layers of batt material. The press fabric normally has a conveyer belt-like shape and, during the various operations previously mentioned, a large amount of water built up in the press fabric is subsequently removed by suction or various other drainage devices, usually after the paper web and press fabric are no longer in direct contact.

In the press section of the machine, it is advantageous to remove as much water as possible from the paper web without causing any damage thereto, such as by crushing. Crushing occurs when an excessive amount of water is removed from the paper web, the excessive water then accumulating at the ingoing side of the nip, not carrying through the nip, and moving in a direction counter to that of the moving paper web. Accordingly, care should be taken to ensure that there is sufficient void volume present in the area of the press nip (either in the papermaking fabric or in the press rolls) such that, as the paper web undergoes compaction and compression, all of the water expressed therefrom will be carried through the nip.

The resilience of a press fabric is calculated by the change in permeability and caliper of the press fabric upon entering the press nip and as it leaves the press nip. The decrease in permeability and/or caliper of the press fabric after going through the press nip is used as a parameter for compaction resistance.

Moreover, characteristics such as paper sheet dewatering, sheet surface smoothness, sheet pick-up and sheet carrying, among others, are sensitive to press fabric design. An ideal press fabric will promote an increased area of interface, or contact area, between the fabric and paper, leading to greater adhesion between the fabric and the sheet, and therefore to improved sheet pick up and sheet carrying performance. In addition, the increased sheet/fabric interface area provides a more effective sheet support in the press, leading to more efficient sheet dewatering.

The surface of the press fabric is determinative of the marking characteristics found on the paper. The surface of the base fabric is usually determinative of the amount of shadow marking. If the surfaces of both the base fabric and the press fabric are more uniform, drainage of the press fabric will be better and the sheet surface quality will be higher. The quality of sheet surface uniformity is determined by the combination of contact points and contact area of the press fabric, and in press fabrics having good uniformity the contact area is increased.

Therefore, one object of the present invention is to provide an improved papermakers' fabric for use in the press section of a papermaking machine.

Another object of this invention is to provide a papermakers' fabric having means for increasing the amount of water removed from a paper web in the press section of a papermaking machine.

A further object of the present invention is to provide an improved papermakers' press fabric having increased compaction resistance and better resilience.

Still another object of the present invention is to provide an improved papermakers' press fabric providing superior wear resistance.

A further object of the present invention is to provide a press fabric having an improved surface, giving uniform drainage and better sheet quality.

Another object of the present invention is to provide a papermakers' press fabric with a stabilised batt layer, providing constant runnability.

These objects and other advantages are achieved by utilisation of bicomponent material in a press fabric as described herein.

The bicomponent material employed in the present invention comprises fibre-form material having a core component and a cover component, in which the cover has a melting point lower than that of the core. More particularly, the melting point of the cover material is such that the cover material softens and flows under heat setting conditions employed in production of the press fabric.

According to a general aspect of the present invention, there is provided a press fabric for a papermaking machine, comprising at least one layer of fibrous material incorporating bicomponent material in an amount of from 10% to 100% of the fibrous material in the layer, said layer having been subjected to heat setting conditions causing the cover material of the bicomponent material to flow.

As in most press fabrics, the papermakers' fabric of the present invention typically comprises one or more base fabrics. The base fabrics may be single layer or multilayer. If there is one base fabric, the weave for the base fabric will be selected according to the type of paper to be produced with the press fabric. If there is more than one base fabric in the press fabric of the present invention, the weave design of the individual fabric layers may be identical or they may be different. Generally, in the case of more than one base fabric being present, the base fabric on the side of the press fabric which will contact the paper web will have a favourable papermaking surface. In addition, the base fabric on the side of the press fabric which will contact the papermaking machine will have superior wear and abrasion resistant characteristics. It is within the skill of those knowledgeable in the field to select weaves for the one or more base fabrics to meet the needs of the press fabric as required for its anticipated use.

The conventional yarns utilised in the one or more base fabrics of the press fabric of the present invention may vary, depending upon the desired properties of the final composite press fabric. For example, the yarns may be multifilament yarns, monofilament yarns, twisted multifilament and/or monofilament yarns, spun yarns, or any combination of these yarns. It is within the skill of those practising in the relevant art to select a yarn type, depending on the purpose of the desired press fabric, for utilisation with the concepts of the present invention.

Yarns selected for use in the or each base fabric layer of the press fabric of the present invention may be of material(s) commonly used in press fabric base fabric layers. For example, the yarn material(s) could be selected from cotton, wool, polypropylenes, polyesters, aramids and polyamides. Again, one skilled in the relevant art will select a yarn material according to the particular application of the final composite press fabric.

The press fabric of the present invention may also incorporate one or more layers of batt material. The batt material layers may be of the same general thickness throughout the press fabric or they may be stratified. A fine top layer of batt material will often be called a cap layer whereas a coarse batt layer above the base fabric is generally called the substrate. These terms are known in the industry. The conventional batt material generally comprises fibres formed from natural or synthetic materials commonly used for this purpose, including animal fibres such as wool and synthetic fibres such as polyacrylics e.g. 'Orlon', polyesters e.g. 'Dacron', and polyamides e.g. 'Nylon'.

The bicomponent material which is an essential part of the press fabric of the present invention may be present as monofilaments in the base fabric and/or as fibres in the batt material. When the base fabric and/or the batt material is in the form of more than one layer, the bicomponent material may be present in one or more than one such layer or even in all such layers. The ratio of bicomponent material to conventional material within a layer may vary in the range 1:9 to 1:0.

The monofilaments or fibres of bicomponent material comprise a core component and a cover component, the cover component having a lower melting point than the core component. The cover component should soften or melt under the heat-setting conditions employed to produce the press fabric, whereas the core component suitably should not melt under those conditions. Normal heat-setting temperatures for production of the press fabric are in a range of from about 150°C to 180°C. Accordingly, preferably the core component is of material having a melting point above 180°C and the cover component is of material having a melting point below 180°C or even below 150°C.

Examples of suitable core materials are synthetic polymer materials such as polyesters and polyamides e.g. polyamide-6.6, polyamide-6 and polyamide-6.10.

Examples of suitable cover materials are synthetic polymer materials such as polyethylene, polypropylene and polyamides e.g. polyamide-6.12, polyamide-6, polyamide-12 and polyamide-11.

Suitable bicomponent monofilament and fibre materials are available from a number of suppliers, such as ICI United States Inc., Wilmington, Delaware 19897, USA.

In a preferred embodiment of the invention, the bicomponent material comprises from 20% to 60% core material and correspondingly from 80% to 40% cover material.

According to one embodiment of the invention, bicomponent material is incorporated in the yarns of a base fabric. The base fabric suitably comprises interwoven machine direction yarns and cross machine direction yarns, from 10% to 100% of the machine direction yarns and cross machine direction yarns comprising monofilaments of bicomponent material. The bicomponent material monofilaments preferably are present as single monofilaments or twisted monofilaments. The remaining yarns, if any, may be of conventional base fabric material. When more than one base fabric is present in the press fabric assembly, one or more than one of the base fabrics may contain bicomponent material.. The press fabric assembly may additionally comprise one or more layers of batt material which may or may not contain bicomponent material.

According to another embodiment of the invention, bicomponent material is incorporated in the fibres of a batt material. Bicomponent material fibres may be present as 10% to 100% of the fibres in a batt layer. When bicomponent material fibres are present in an amount of less than 100% of the fibres in the batt layer, the bicomponent material fibres preferably are distributed in random orientation with conventional batt material fibres. The press fabric may contain one or more than one batt layer. When more than one batt layer is employed, bicomponent material fibres may be present in one or more than one, even all, of the layers. A batt layer containing bicomponent material fibres preferably may be present as the cap layer of the press fabric. Additionally or alternatively, by way of example, the press fabric may comprise a batt layer containing bicomponent material fibres as the machine-contacting layer of the press fabric, and/or as a substrate layer on one or each side of a base fabric, and/or as a layer intermediate two base fabrics. The base fabric or fabrics may or may not contain bicomponent material.

The press fabric may be finished according to conventional methods.

When the layers required in the press fabric have been assembled, preferably they are needled together, as is known in the art, in one or more needling operations. In the needling process, all the layers are joined together. Alternatively, the layers may be bonded, as is known in the art.

The assembled structure is then subjected to one or more heat setting operations. Heat setting has the effect of stabilising felt dimensions and, with the bicomponent material present according to this invention, softening the lower melting point cover material. If the bicomponent material is used in a batt layer, the bicomponent material flows into the crossings and interstices of the batt, forming a kind of matrix within the batt layer. When bicomponent material is used in a base fabric, heat setting has two effects. Firstly, the softened surface of the base fabric provides for better bonding of the fibrous batt material to the base fabric. Additionally, the base fabric structure is smoothened by flattening the base fabric knuckles and round-shaped monofilaments. The one or more heat setting operations suitably are performed at approximately 150°C to 180°C, according to the bicomponent material fibres used. The temperature at which heat setting is performed should be high enough to soften or melt the lower melting point cover material but not high enough to affect the higher melting point core material. It is within the skill of those knowledgeable in the art to select the desirable temperature for heat setting according to the concept of the present invention.

It has been found that a press fabric incorporating the concepts of the present invention has greater wear resistance and compaction resistance, in some instances up to 50% more than conventional press fabrics. In traditional press fabrics, most compaction occurs in the batt material. It has been found that, with the present invention, the batt material is stabilised by creation of the matrix and consequently the papermakers' fabric's drainage over its life is improved.

Additionally, the melting process increases contact area on the press fabric surface and gives more uniform pressure transfer, and consequently better paper sheet quality. Finally, the knuckles in a base fabric incorporating bicomponent material yarns are smoothened by the finishing process. With such a surface, the press fabric will have more uniform pressure transfer, will be less prone to mark the paper and provides a more uniform paper surface.

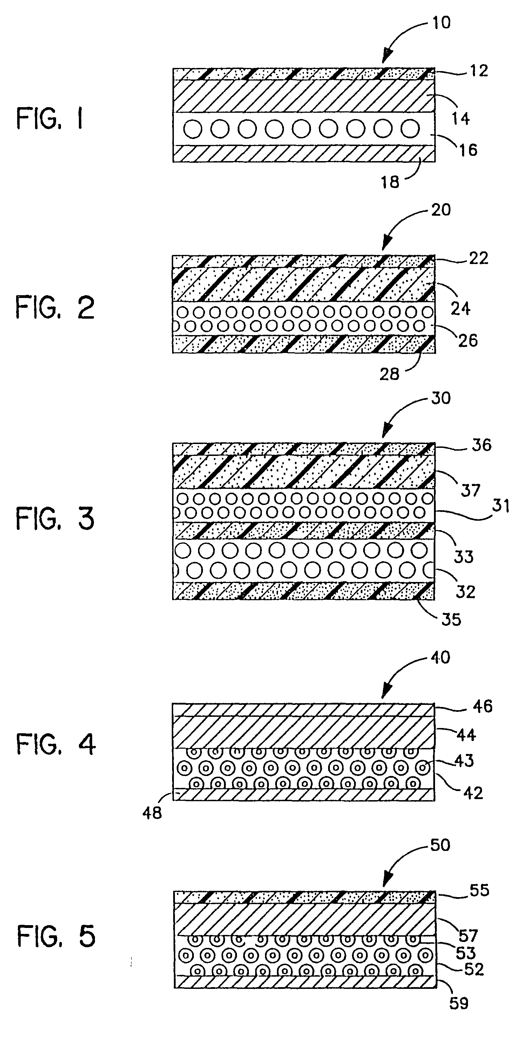

By way of example only, embodiments of press fabric in accordance with the present invention will now be described with reference to the accompanying drawings, in which Figure 1 to Figure 5 each shows a separate embodiment in diagrammatic cross-section.

Figure 1 shows a press fabric 10 including a stratified batt layer. The fine top surface batt layer or cap layer 12 incorporates bicomponent material fibres. Immediately below the cap layer is a substrate batt layer 14 of conventional batt material fibres. Below the substrate is a base fabric 16 and a conventional batt material layer 18 is present below the base fabric 16 to provide the bottom surface of the press fabric 10.

Figure 2 illustrates a press fabric 20 wherein a base fabric 26 is surrounded on both sides by layers of batt material 22,24 and 28. In this embodiment, all batt material layers 22,24 and 28 incorporate bicomponent material, in amounts ranging from 10% to 100%.

In a third embodiment shown in Figure 3, a press fabric 30 is constructed with two base fabric layers 31,32. A layer of batt material 33 incorporating bicomponent material fibres is positioned between the two base fabrics 31,32. Two additional layers of batt material 36,37 of different thicknesses incorporating bicomponent material fibres are present on the papermaking side of the press fabric, and a further layer of batt material 35 also incorporating bicomponent material fibres is present on the machine side of the press fabric 30.

A fourth embodiment of a press fabric of the present invention 40 is shown in Figure 4. In this embodiment, the base fabric 42 is produced from woven bicomponent material yarns 43. A press fabric produced from woven bicomponent material yarns may have one or more layers of batt material attached, although it need not have any batt material. In the embodiment shown in Figure 4, the base fabric 42 incorporating bicomponent material yarns 43 is surrounded by layers of batt material 44,46,48. As shown, the layers of batt material 44,46,48 are conventional batt material. However, any or all of the layers of batt material 44,46,48 may incorporate 10% to 100% of bicomponent material fibres.

Figure 5 illustrates another embodiment of a press fabric 50 in which a base fabric 52 incorporating woven bicomponent material yarns 53 is assembled with batt material layers 55,57 and 59. As shown, the cap layer 55 includes bicomponent material fibres and the other batt layers 57 and 59 are of conventional batt material. Of course, modifications to this embodiment will be obvious to those skilled in the art. For example, a press fabric as shown in Figure 5 can include more than one base fabric. If so, at least one base fabric will include bicomponent material yarns in amounts ranging from 10% to 100%. In the described variation to Figure 5, the layer of batt material between the base fabrics may include bicomponent material fibres, as may any or all of the layers of batt material throughout the press fabric.

It is within the knowledge of one skilled in this art to select the layers of the assembly to be included in a press fabric of the present invention. At least one base fabric with one or more layers of batt material are envisioned with this press fabric (felt), as are any number and types of fabric weaves. While preferred embodiments of the invention have been described and illustrated, it will be understood that modifications may be made in the invention without departing from its spirit and purpose.

## Claims

1. A press fabric for a papermaking machine comprising at least one base fabric of interwoven machine direction yarns and cross machine direction yarns, and at least one layer of batt material wherein at least one layer of said at least one layer of batt material comprises 10-100% bi-component material fibres and each of said bi-component material fibres comprises a core component and a cover component of a lower melting point than the core component, and said at least one base fabric and at least one layer of batt material are joined together and heat set.

2. A press fabric according to claim 1 wherein the at least one base fabric comprises two base fabrics.

3. A press fabric according to claim 2 wherein said at least one batt material layer comprises a cap layer of batt material incorporating said bi-component material fibres overlying one side of said base fabric and a second layer of batt material incorporating said bi-component material fibres on a side of said base fabric opposite said cap layer.

4. A press fabric according to claim 3 further comprising an intermediate layer of batt material positioned between said two base fabrics.

5. A press fabric according to claim 4 wherein said intermediate batt layer incorporates 10-100% bi-component material fibres.

6. A process to produce a press fabric for use in a papermaking machine comprising the steps of providing a base fabric of interwoven machine direction yarns and cross direction yarns, providing at least one layer of batt material adjacent the base fabric, wherein said at least one layer of batt material includes 10-100% bi-component material fibres and each of said bi-component material fibres comprises a core of component and a cover component of a lower melting point than the core component, and needling said at least one batt layer to said base fabric.

## Patentansprüche

1. Textiles Preßgebilde für eine Maschine zur Papierherstellung, das mindestens ein Grundgewebe aus miteinander verwobenen, in Maschinenlaufrichtung und quer zur Maschinenlaufrichtung verlaufenden Garnen, und mindestens eine Schicht aus Wattiermaterial umfaßt, wobei mindestens eine Schicht der mindestens einen Schicht aus Wattiermaterial 10 bis 100% Fasern eines Zweikomponentenmaterials umfaßt und jede dieser Fasern des Zweikomponentenmaterials eine Kernkomponente und eine Deckkomponente mit niedrigerem Schmelzpunkt als die Kemkomponente umfaßt, und das mindestens eine Grundgewebe und mindestens eine Schicht aus Wattiermaterial zusammengefügt und heißfixiert werden.

2. Preßgebilde nach Anspruch 1, bei dem das mindestens eine Grundgewebe zwei Grundgewebe umfaßt.

3. Preßgebilde nach Anspruch 2, bei dem die mindestens eine Wattiermaterialschicht eine Deckschicht aus Wattiermaterial mit den Fasern des Zweikomponentenmaterials, die über einer Seite des Grundgewebes liegt, und eine zweite Schicht aus Wattiermaterial mit den Fasern des Zweikomponentenmaterials auf einer der Deckschicht gegenüberliegenden Seite des Grundgewebes umfaßt.

4. Preßgebilde nach Anspruch 3, femer mit einer Zwischenschicht aus Wattiermaterial, die zwischen den beiden Grundgeweben angeordnet ist.

5. Preßgebilde nach Anspruch 4, bei dem die Zwischen-Wattierschicht 10 bis 100% Fasern eines Zweikomponentenmaterials enthält.

6. Verfahren zur Herstellung eines Preßgebildes zur Verwendung in einer Maschine zur Papierherstellung, das folgende Schritte umfaßt: Bereitstellen eines Grundgewebes aus miteinander verwobenen, in Machinenrichtung und quer zur Maschinenrichtung verlaufenden Garnen, Ausbilden wenigstens einer Schicht aus Wattiermaterial benachbart dem Grundgewebe, wobei die wenigstens eine Schicht aus Wattiermaterial 10 bis 100% Fasern eines Zweikomponentenmaterials enthält und jede der Fasern des Zweikomponentenmaterials eine Kemkomponente und eine Deckkomponente mit niedrigerem Schmelzpunkt als die Kernkomponente aufweist, und Vernähen der wenigstens einen Wattierschicht mit dem Grundgewebe.

## Revendications

1. Toile de presse pour une machine de papeterie, comportant au moins un tissu de base de fils intertissés suivant la direction de la machine, et des fils en direction transverse de machine, et au moins une couche de matériau en nappe de fibres non tissées, **caractérisée en ce qu'**au moins une couche de ladite au moins une couche de matériau en nappe de fibres, comporte 10 à 100% de fibres de matériau bi-composant et chacune des fibres de matériau bi-composant comporte un composant noyau et un composant de couverture à point de fusion inférieur à celui du composant noyau, et ledit au moins un tissu de base et au moins une couche de matériau en nappe de fibres sont liés l'une à l'autre et fixés à la chaleur.

2. Toile de presse selon la revendication 1, **caractérisée en ce que** le au moins un tissu de base comporte deux tissus de base.

3. Toile de presse selon la revendication 2, **caractérisée en ce que** la au moins une couche de matériau en nappe comporte une couche de couverture de matériau en nappe incorporant lesdites fibres de matériau bi-composant recouvrant un côté dudit tissu de base et une seconde couche de matériau en nappe incorporant lesdites fibres de matériau bi-composant sur un côté dudit tissu de base opposé à ladite couche de couverture.

4. Toile de presse selon la revendication 3, **caractérisée en ce qu'**elle comporte en outre une couche intermédiaire de matériau en nappe de fibres, positionnée entre les deux tissus de base.

5. Toile de presse selon la revendication 4, **caractérisée en ce que** ladite couche en nappe de fibres intermédiaire inclut 10 à 100% de fibres de matériau bi-composant.

6. Procédé pour produire une toile de presse destinée à être utilisée dans une machine de papeterie, comportant les étapes de : fournir un tissu de base de fils intertissés selon la direction de la machine et de fils selon la direction transverse à la machine, fournir au moins une couche de matériau en nappe de fibres, adjacente au tissu de base, **caractérisée en ce que** ladite au moins une couche de matériau en nappe de fibres inclut 10 à 100% de fibres de matériau bi-composant, et chacune desdites fibres de matériau bi-composant comporte un composant noyau et un composant de couverture présentant un point de fusion inférieur à celui du composant noyau, et coudre ladite au moins une couche de nappe de fibres audit tissu de base.
